Europäisches Patentamt

European Patent Office

Office européen des brevets

(11) Publication number: **0 362 964**
**A1**

## EUROPEAN PATENT APPLICATION

(21) Application number: 89202501.6

(22) Date of filing: 05.10.89

(51) Int. Cl.⁵: **A01F 25/20 , B26F 1/38 , A41H 43/00**

(30) Priority: 07.10.88 NL 8802469

(43) Date of publication of application:
**11.04.90 Bulletin 90/15**

(84) Designated Contracting States:
**AT DE FR NL**

(71) Applicant: Trioliet Mullos B.V.
**Smitsbreeweg 2**
**NL-7581 HE Losser(NL)**

(72) Inventor: **Kieft, Marinus Bernardus**
**Tuinstraat 10**
**NL-7581 CB Losser(NL)**

(74) Representative: de Vries, Johannes Hendrik
**Fokke et al**
**Octrooibureau Los en Stigter B.V. P.O. Box**
**20052**
**NL-1000 HB Amsterdam(NL)**

(54) Apparatus for cutting a sillageblock.

(57) An Apparatus for cutting a silageblock comprises a frame (1) a drivable displacement means (7) movably connected to said frame (1), and a drive housing (8) for a cutting means (9) provided on said displacement means (7). The drive housing (8) is movable along a path by the displacement means (7). The drive housing (8) is connected to the displacement means (7) in a freely pivotable manner, such that at least during a part of a displacement of the displacement means (7) the drive housing (8) is adapted to pivot freely about an effective pivot axis of which the component in the plane of said cutting means (9) as seen in the direction of displacement is directed away from the drive housing (8).

fig.1

## Apparatus for cutting a silage block

The invention relates to an apparatus for cutting a silage block, comprising a frame, a drivable displacement means movably connected to said frame, and a drive housing for a cutting means provided on said displacement means, the drive housing being movable along a path by the displacement means.

In a known embodiment of an apparatus of this type (see NL-A-7901393) the drive housing is in fact rigidly connected to the displacement means. During the operation of cutting a silage block lateral forces on the cutting means develop therewith, said lateral forces mostly being directed inwardly and cause the cutting means to bend out in lateral direction as a consequence of the rigid mounting of the drive housing. As a result thereof there is caused a slanting cut in the silage, while in extreem cases the cutting means can impinge on the frame at the end of the path.

It is an object of the invention to provide an apparatus for cutting a silage block, wherein this disadvantage is removed in in an effective way.

This object is obtained according to the invention with an apparatus that is characterised in that the drive housing is connected to the displacement means in a freely pivotable manner, such that at least during a part of a displacement of the displacement means, the drive housing is adapted to pivot freely about an effective pivot axis of which the component in the plane of said cutting means, as seen in the direction of displacement, is directed away from the drive housing.

Due to this particular pivotable mounting of the drive housing to the displacement means, the cutting means, if a lateral force is exerted onto the cutting means, will pivot about the effective pivot axis wherein, due to the orientation of the pivot axis, not only a lateral deflection but also a rotation of the cutting means about the longitudinal axis thereof is caused, said rotation being directed such that the displacement of the leading edge of the cutting means due to the rotation thereof about the longitudinal axis is opposite to the lateral deflection of the leading edge of the cutting means as a consequence of the exerted lateral force. Due to this rotation of the cutting means there is caused an angle between the direction of displacement and the plane of the cutting means so that, upon a displacement of the cutting means through the silage, there is caused a reaction force on to the cutting means opposing the initially exerted force. The greater the lateral deflection becomes, the greater the rotation of the cutting means about its longitudinal axis and the greater the reaction force will be forcing the cutting means back again to its initial position. In this way there is provided a fully automatic self-controlling compensation device for the cutting means maintaining it in its path.

It is noted that there is known an apparatus for cutting a silage block (see EP-A-0 153 895), wherein the cutting means is rotatable about its longitudinal axis. However, this rotation of the cutting means upon a lateral deflection thereof is controlled by a control means. Such a control means with respective control circuit is not required in the present invention. According to the invention a self-control of the cutting means takes place.

An embodiment of the apparatus according to the invention is characterised in that the effective pivot axis is defined by separate vertical and horizontal axes about which the drive housing is permitted to pivot simultaneously, the horizontal axis extending in the direction of displacement of the drive housing.

In this way the pivoting movement about the inclined effective pivot axis is effected by combining a pivoting movement about horizontal and vertical axes.

This may be realised in a simple way in that the drive housing is connected with an intermediate support in a manner pivotable about said horizontal axis, and the intermediate support being connected with the displacement means in the manner pivotable about said vertical axis.

In an embodiment of the apparatus for cutting a silage block, wherein the direction of displacement of the displacement means is reversible, it is advantageously when a restraining and yielding means, which acts upon the drive housing and can be switched when the direction of displacement is reversed, determines the direction of rotation of the drive housing.

In this way, the direction of the effective pivot axis is adjusted to the direction of displacement of the displacement means through the restraining and yielding means.

It is favourable if the drive housing comprises four fulcra lying in a plane parallel to the plane through the cutting means and being arranged relative to each other in the vertices of a trapezium, there being always two diagonally opposed fulcra active dependent on the direction of displacement of the drive housing.

In this manner the fulcra determine the proportion between the rotation of the drive housing about the horizontal and vertical axes and thereby fixing the position of the effective pivot axis.

Advantageously two adjacent fulcra of the drive housing cooperate with the restraining and yielding means provided on the displacement means, wherein preferably the restraining and yielding means is constructed such that, when the direction of displacement of the displacement means is reversed, it is automatically switched.

Due to the these features the direction of the effective pivot axis of the drive housing is determined by the cooperation of the restraining and yielding means which, at any time, restraine one of the respective fulcra and release the other. Since the restraining and yielding means switches automatically upon reversing the direction of displacement of the displacement means and drive housing, the effective pivot axis of the drive housing is also automatically adjusted to the direction of displacement.

In the embodiment of the apparatus according to the invention wherein the displacement means comprises a carriage being displaceable along a substantially U-shaped guide by means of a drive chain engaging the carriage and extending along the guide, the guide being fixed to the frame and extending in a substantially horizontal plane, it is favourable when said adjacent fulcra of the drive housing are in force transmitting connection with the parts of the drive chain on either side of the point of engagement of the drive chain to the carriage.

In this manner the drive chaining of the displacement means serves as restraining and yielding means, wherein the driving tensioned chain part restrains the respective fulcrum of the drive housing, while the ineffective slack chainpart is yielding and thereby releasing the respective fulcrum.

Further features and advantages of the invention will appear from the following description with reference to the drawing showing an embodiment of the invention schematically by way of example.

Fig. 1 is a perspective view of an embodiment of the apparatus according to the invention for cutting a silage block.

Fig. 2 is an enlarged exploded view of a portion of the apparatus of fig. 1, wherein the relevant parts of the displacement means and the drive housing are illustrated while the cutting means and the drive means therefor are left out for the purpose of clarity.

Fig. 3 is a sectional view of the displacement means with drive housing along the line III-III in fig. 4, wherein the cutting means and the drive means therefor are omitted.

Fig. 4 is a view in the direction of arrow IV in fig. 3.

Fig. 5 illustrates the movement of the cutting blade of the cutting means upon a lateral deflection thereof.

Fig. 6-8 are schematic horizontal sectional views of alternative embodiments of the restraining and yielding means.

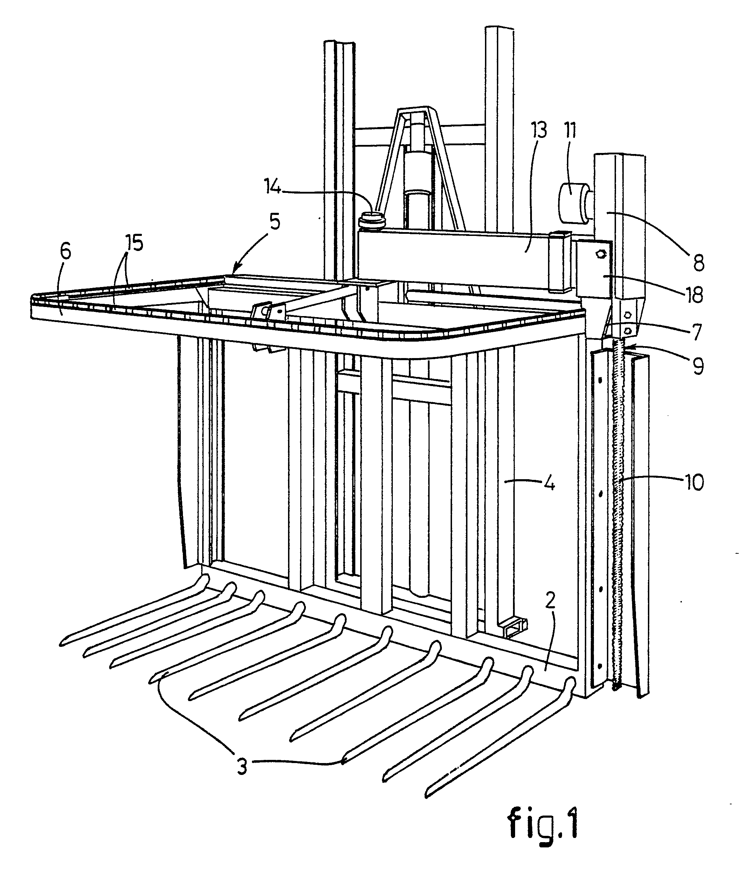

Referring to fig. 1, there is shown an embodiment of the apparatus according to the invention for cutting a silage block which can also be transported by the apparatus.

Said apparatus comprises a frame 1 including mounting means with which the apparatus is permitted to be mounted to the three-point suspension support of a tractor.

The frame 1 includes a horizontal transfer beam 2, to which a plurality of parallel substantially horizontal teeth 3 are fixed. To the transverse beam 2 there is connected an upright frame portion 4 supporting a horizontal frame work 5 of substantially rectanguler configuration at a distance above said teeth 3. This framework 5 forms a substiantially U-shaped guide 6 along which a carriage 7 serving as displacement means is movable back and forth. The carriage 7 carries, in a way to be discribed further on, a drive housing 8 for a cutting means 9 provided with a substantially vertically downwardly directed elongated double cutting blade 10 carrying cutting teeth on both sharp edges. Both halves of said double cutting blade 10 are guided to be moved up and down and are driven by a motor 11 secured to the drive housing 8 and, in the embodiment shown by way of example, being constructed as a hydraulic motor 11 of which the hydraulic hoses are not illustrated.

Carriage 7 is mounted to the free end of a telescopic support arm 13 by means of a vertical shaft 12, said support arm 13 being connected at its end facing away from the drive carriage 7 to the frame 11 in a manner pivotable about a vertical shaft 14.

A circulating endless drive chain 15 is guided along the horizontal framework 5 forming the guide 6, the carriage 7 being secured to said drive chain 15. The drive chain 15 is driveable by means of a seperate drive motor (not shown), which may have a driving connection to the drive chain 15 by means of a transmission not shown. Through the drive chain 15 a pressure force is exerted continuously with which the cutting blade 10 is urged through the silage.

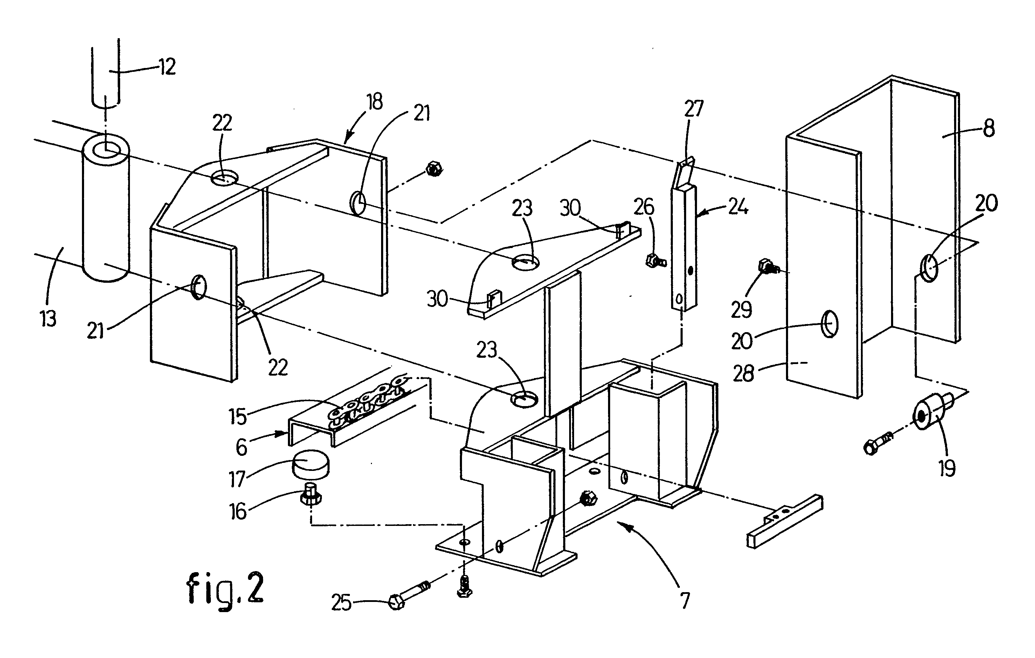

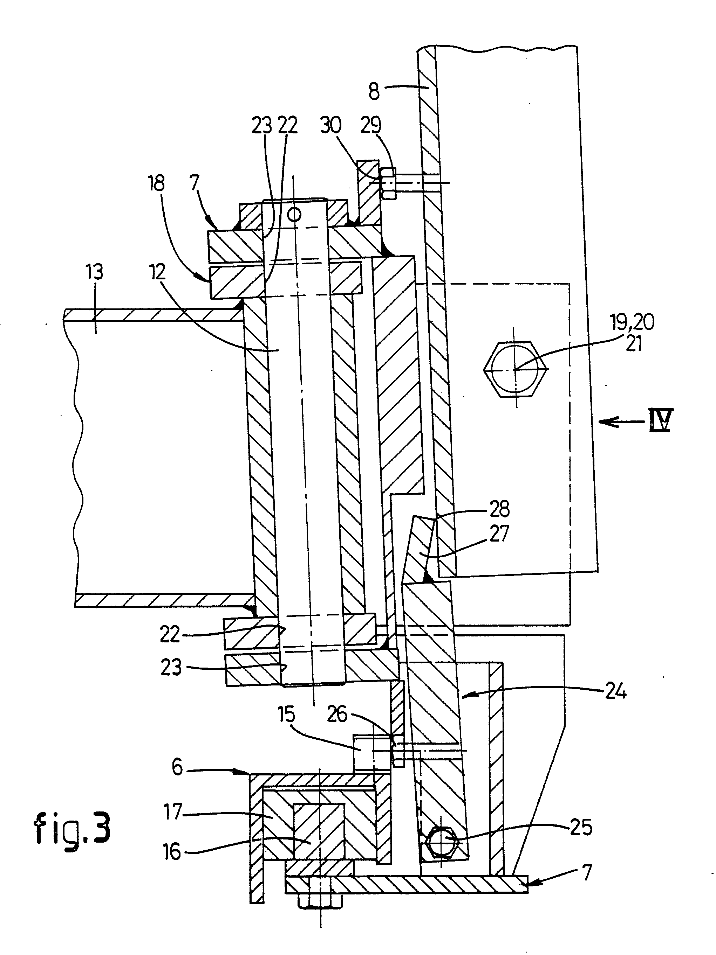

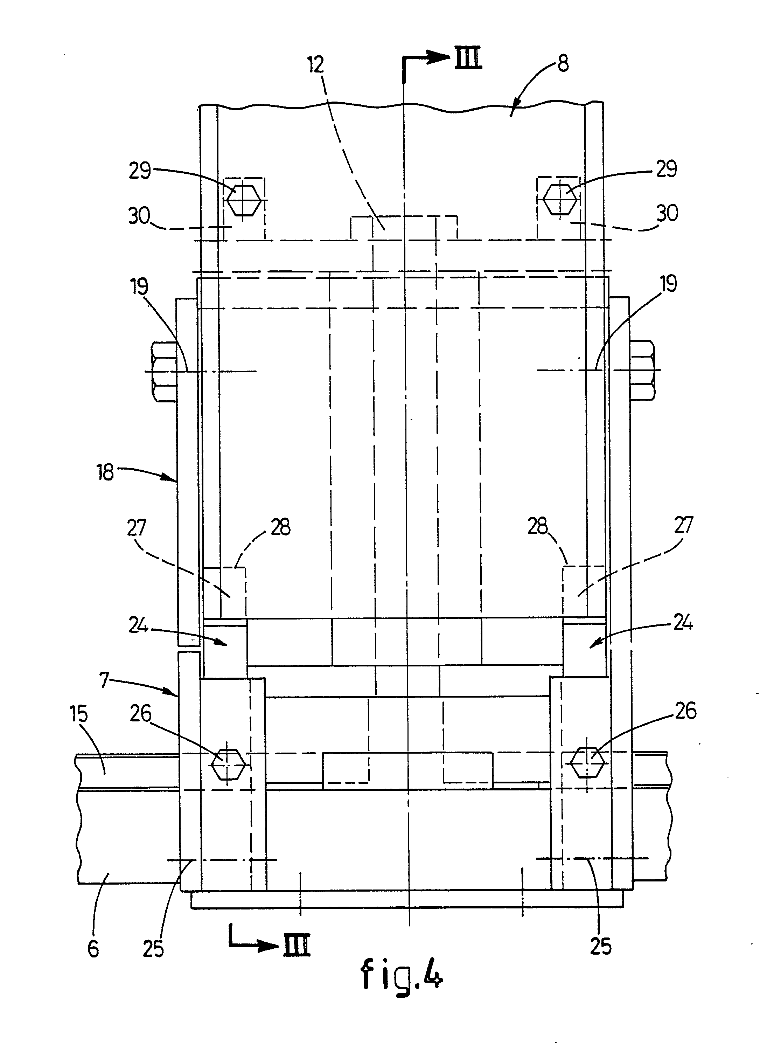

Referring to fig. 2-4 of the drawing, there is shown that the carriage 7 having two rollers 17 rotatable about vertical axes 16 or shafts is guided along the depending flanges of the U-sections turned upside down of which the U-shaped guide 6 is built.

As is shown in fig. 2, the supporting part of the drive housing 8 consists of an upright U-section connected to an intermediated support 18 and pivotable about a horizontal axis. Such horizontal axis is formed by two journals 19 being inserted through aligned holes 20 and 21 in the respective vertical flanges of the drive housing 8 or the intermediate support 18, respectively. The intermediate support 18 is connected to the carriage 7 in a manner pivotable about a vertical axis, which vertical axis is formed by said shaft 12 guided through aligned holes 22 and 23 in the respective horizontal flanges of the intermediate support 18 or the carriage 7, respectively.

Near both sides of the carriage 7 there is provided an upright finger 24 being pivotable at its lower end about a pivot shaft 25 extending parallel to the journals 19 of the drive housing 8 and being constructed as a bolt, and being supported by upright flanges of the carriage 7. In said finger 24 at the distance above the pivot shaft 25 there is screwed bolt 26 serving as fulcrum and being in contact with the drive chain 15. At the upper end of the finger 24 there is formed a cam 27 being in contact with the rear wall of the drive housing 8 at a position of a fulcrum 28.

At a distance above the fulcra 28 there are disposed support bolts 29 constructed as fulcrum and being screwed into the rear wall of the drive housing 8 and supporting against a respective support cam 13 on the lower flange of the carriage 7.

It is noted that said pivoting movements of drive housing 8 relative to the intermediate support 18 and of the intermediate support 18 relative to the carriage 7 are only small and are also limited by the structure thereof.

The operation of the apparatus for cutting a silage block in the embodiment shown by way of example is as follows.

For cutting a silage block the apparatus is positioned so as to receive the silage between the teeth 3 and the guide 6 of the framework 5. Thereupon the carriage 7 with the drive housing and the cutting means 9 is moved from the end position shown in fig. 1 along the guide 6 by means of a drive motor. A drive motor 11 also drives the cutting means 9 so that the cutting blade 10 of the cutting means 9 is pulled through the silage moving up and down.

If by any cause a lateral inward force is exerted by the silage on the cutting blade 10 of the cutting means 9 than the cutting means 9 transmits a lateral force and a torque arising therefrom to the drive housing 8. As a consequence thereof the drive housing 8 pushes at the fulcra 28 against the cam 27 of the fingers 24. These would thereby pivot about their respective pivot axis 25. The finger 24 on the front side of the carriage 7, as seen in the direction of displacement of the cariage 7, is, however, prevented from pivoting by the bolt 26 thereof resting against the driving, pulling part of the drive chain 15. Since this driving part of the drive chain 15 is under tension of stress its resistance to lateral load is also considerable so that the driving part of the driving chain 15 can be considered stiff in the pressing direction of the bolt 26 and a pivoting movement of the respective finger 24 is prevented. The finger 24 on the trailing side of the carriage 7, however, is permitted to pivot since the bolt 26 thereof is resting against the ineffective slack part of the drive chain 15 and is allowed to push the drive chain laterally away when the finger 24 is loaded by the drive housing 8. Therefore this finger 24 is allowed to pivot about the pivot axis 25 and the drive housing 8 encounters hardly no resistance at the fulcrum 28 near the trailing side of the cariage 7.

Because the drive housing 8 is connected to the intermediate support 18 pivotable about the horizontal journals 19 and the intermediate support 18 in turn is connected to the carriage 7 pivotable about the vertical shaft 12, the drive housing 8 is pivotable -indeed only to a limited extent- about horizontal and vertical axes. Since the drive housing 8 is further permitted to support against a respective fixed support cam 30 on the carriage 7 by means of a support bolt 29 at a distance above each fulcrum 28, the yielding of the finger 24 on the trailing side of the carriage 7 will cause the drive housing 8, upon the mentioned loading by the cutting means 9, to pivot about an effective imaginary pivot axis extending through the fulcrum 28 on the leading side of the drive housing 8 and the point of engagement between the support bolt 29 on the trailing side of the drive housing 8 and the respective support cam 30 on the cariage 7. This effective imaginary pivot axis inclines under a small angle to the vertical plane extending parallel to the direction of displacement of the cariage 7 and the drive housing 8. The component of the effective pivot axis in this vertical plane inclines downwardly in the direction of displacement. Due to said pivoting movement of the drive housing 8 the support bolt 29 on the leading side of the carriage 7 releases from the support cam 30 on the carriage 7.

Since the drive housing 8 carries out said pivoting movement about the effective inclined pivot axis, the cutting means 9 and consequently the cutting blade 10 also pivot in the same manner. This means that the cutting blade 10 not only deflects laterally due to the pivoting movement about the horizontal journals 19, but also rotates about the longitudinal axis as a result of the rotation about the vertical shaft 12. This rotation about the longitudinal axis of the cutting blade 10 is in such direction that the displacement of the leading sharp edge of the cutting blade 10 as a consequence of the rotation about the longitudinal axis is opposite to the displacement of this leading sharp edge as a result of the pivoting movement about the horizontal journals 19. As a consequence of the fact that the vertical shaft 12 is spaced from the imaginary effective pivot axis of the drive housing 8 this drive housing 8 will not only carry out said pivoting movement but also a small movement in longitudinal direction upon said rotation about the vertical shaft 12.

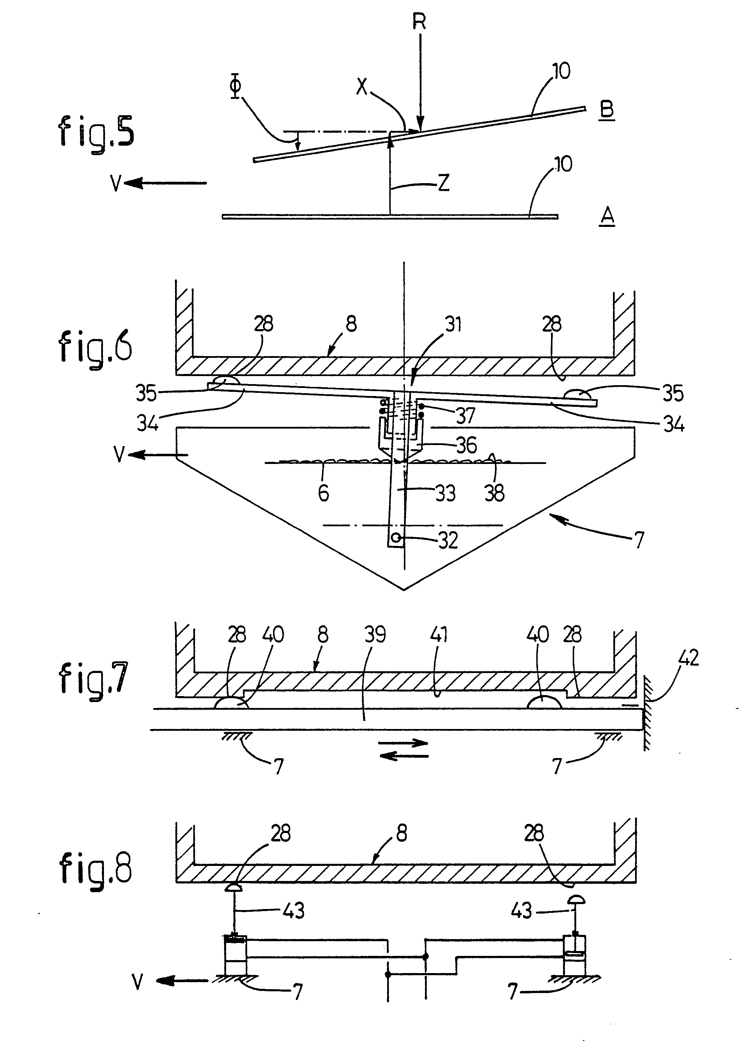

Fig. 5 illustrates in exaggerated fashion the movement of the cutting blade 10 by two positions thereof, seen in horizontal section, a vertical position A and a deflected position B. The direction of displacement of the carriage 7 and therefore of the cutting blade 10 is indicated by arrow V. Arrow Z indicates the lateral displacement of the cutting blade 10 and arrow $\phi$ illustrates the rotation of the cutting blade 10 about its longitudinal axis. Finally arrow X indicates the rearward displacement of the cutting blade 10 with respect to the displacement in direction V as a consequence of the rotation of the cutting blade 10 about said spaced vertical shaft 12.

If the cutting blade 10, in its position B of fig. 5, is moved through the silage in the direction of displacement V there is caused an effective reaction force on the cutting blade, of which the lateral component R opposes the initial force exerted by the silage onto the cutting blade 10. This reaction force R becomes larger if the rotation of the cutting blade 10 about the longitudinal axis increases. In this manner the cutting blade 10 is stopped by the reaction force R and is guided back into its proper track.

When the direction of displacement of the carriage 7 is reversed the pulling part and the ineffective part of the drive chain 15 come to lie on opposite sides of the carriage 7 as a consequence of which the restraining function and the yielding function of the chain parts with respect to both fingers 24 and therefore the fulcra 28 of the drive housing are changed, as a consequence of which the drive housing 8 is permitted to pivot about the other effective imaginary pivot axis through the fulcrum 28 and the point of engagement of the support bolt 29 against the support cam 30. With respect to the reversed direction of displacement the situation is than exactly the same as with the direction of displacement discribed hereinbefore. Also in that case a self-correcting operation of the drive housing 8 and the cutting means 9 takes place upon a lateral deflection thereof. The drive chain 15 serves therein as switchable restraining and yielding means wherein the tensioned driving part of the drive chain 15 serves as restraining means and the ineffective slack part as yielding means for the respective fulcrum 28 of the drive housing 8.

Of course, it is possible to construct the switchable restraining and yielding means in variety of other ways, in particularly apparatusses having no drive chain.

Fig. 6-8 give a number of alternatives for the switchable restraining and yielding means. In the embodiment of fig. 6 the restraining and yielding means is formed as tilting element 31 which is connected to the cariage 7 in a manner tiltable about a vertical tilting shaft 32 through the web 33. The tilting element 31 has two aligned fixed arms 34 which are able to urge against the drive housing 8 at the fulcra 28 with cams 35 lying near the ends thereof. The position of the tilting element 31 is determined by a breaking means 36 slidably connected to the symmetrically disposed web 33 and being urged against the guide 6 of the framework 5 by a compression spring 37. The guide 6 is provided with teeth or ribs 38 spaced along its length and between which the sharp tip or cam of the breaking means 36 is engaging. Upon a displacement of the carriage 7 in the direction of the arrow V the displacement of the tip of the breaking means 36 is opposed by the teeth or ribs 38 and the cam 35 on the leading arm 34 of the tilting element 31 is pressed against the respective fulcrum 28 of the drive housing, while the cam 35 on the trailing arm 34 of the tilting element 31 is free of the respective fulcrum 28 of the drive housing 8. The compression spring 37 enables the breaking means 36 to pass along the ribs or teeth 38 of the guide 6. When the direction of displacement V is reversed, the tilting element 31 will tilt about the tilting shaft 32 and will push the cam 35 of the presently leading arm 34 against the respective fulcrum 28 of the drive housing 8.

Fig. 7 shows a further alternative of the restraining and yielding means, in this case consisting of a longitudinal slide 39 having two cams 40 and being connected to the carriage 7 in a manner slidable in the longitudinal direction thereof. The drive housing 8 comprises a recess 41 between the fulcra 28. The slide 39 is at any time positioned such that the cam 40 on the leading side of the carriage 7 abut the fulcrum 28 of the drive housing 8, while the cam 40 on the trailing side of the carriage 7 is positioned opposite to the reces 41 in the drive housing 8. The reversing operation of the slide 39 can be effected by causing the slide 39 to abut against a stop 42 on the frame 1 at the end of the U-shaped path of the carriage 7, whereby the slide 39 is switched.

Fig. 8 illustrates a further alternative of the restraining and yielding means wherein two projections 43 can be hydraulically extended or retracted, respectively.

As is illustrated the restraining and yielding means can be automatically switched in several ways when the direction of displacement of the carriage 7 serving as displacement means is reversed. However it would also be possible to provide a restraining and yielding means which is manually switchable.

The invention is not restricted to the embodiments shown in the drawing and discribed hereinbefore, which can be varied in different ways within the scope of the invention.

## Claims

1. Apparatus for cutting a silage block, comprising a frame, a drivable displacement means movably connected to said frame, and a drive housing for a cutting means provided on said displacement means, the drive housing being movable along a path by the displacement means, **characterised** in that the drive housing is connected to the displacement means in a freely pivotable manner, such that at least during a part of a displacement of the displacement means, the drive housing is adapted to pivot freely about an effective pivot axis of which the component in the plane of said cutting means, as seen in the direction of displacement, is directed away from the drive housing.

2. Apparatus according to claim 1, **characterised** in that the effective pivot axis is defined by separate vertical and horizontal axes about which the drive housing is permitted to pivot simultaneously, the horizontal axis extending in the direction of displacement of the drive housing.

3. Apparatus according to claim 2, **characterised** in that the drive housing is connected with an intermediate support in the manner pivotable about said horizontal axis, and the intermediate support being connected with the displacement means in the manner pivotable about said vertical axis.

4. Apparatus according to claim 1, 2 or 3, wherein the direction of displacement of the displacement means is reversible, **characterised** in that a restraining and yielding means, which acts upon the drive housing and can be switched when the direction of displacement is reversed, determines the direction of rotation of the drive housing.

5. Apparatus according to claim 4, **characterised** in that the drive housing comprises four fulcra lying in a plane parallel to the plane through the cutting means and arranged relative to each other in the vertices of a trapezium, there being always two diagonally opposed fulcra active dependent on the direction of displacement of the drive housing.

6. Apparatus according to claim 5, **characterised** in that said vertical axis is horizontally spaced from the cutting means in the drive housing.

7. Apparatus according to claim 5 or 6, **characterised** in that two adjacent fulcra of the drive housing cooperate with the restraining and yielding means provided on the displacement means.

8. Apparatus according to claim 7, **characterised** in that the restraining and yielding means is constructed such that, when the direction of displacement of the displacement means is reversed, it is automatically switched.

9. Apparatus according to claim 8, wherein the displacement means comprises a carriage being displaceable along a substantially U-shaped guide by means of a drive chain engaging the carriage and extending along the guide, the guide being fixed to the frame and extending in a substantially horizontal plane, **characterised** in that said adjacent fulcra of the drive housing are in force transmitting connection with the parts of the drive chain on either side of the point of engagement of the drive chain to the carriage.

10. Apparatus according to claim 9, **characterised** in that each force transmitting connection between the adjacent fulcra of the drive housing and the drive chain is formed by a finger connected to the carriage and pivotable about a horizontal pivot shaft extending parallel to the direction of displacement of the drive housing, said finger being adapted to engage the respective part of the drive chain and the respective fulcrum of the drive housing.

11. Apparatus according to claim 8, **characterised** in that the restraining and yielding means is hydraulically or mechanically switchable.

fig.1

fig.2

EP 0 362 964 A1

fig.3

fig.4

fig.5

fig.6

fig.7

fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,D | EP-A-153895 (BOTON-MERLET)<br>* page 6, line 20 - page 11; figures 1-5 * | 1, 2, 3,<br>6, 7, 8,<br>11 | A01F25/20<br>B26F1/38<br>A41H43/00 |
| A | EP-A-176748 (VON DER HEIDE)<br>* page 4, line 5 - page 6; figures 1, 2, 3 * | 1 | |
| A,D | DE-A-2929782 (TRIOLIET MULLOS) | | |

TECHNICAL FIELDS
SEARCHED (Int. Cl.5 )

A01F
B26F
A41H

The present search report has been drawn up for all claims

| Place of search | Date of completion of the search | Examiner |
|---|---|---|
| THE HAGUE | 17 JANUARY 1990 | VERMANDER R.H. |

EPO FORM 1503 03.82 (P0401)